# FASCICULE DE BREVET EUROPEEN

(11) **EP 3 195 459 B1**
(45) Date de publication et mention de la délivrance du brevet: **07.05.2025**
(21) Numéro de dépôt: 15770576.5
(22) Date de dépôt: 11.09.2015
(51) Int. Cl.: H02M 3/28, H01F 3/10, H02M 3/337

(54) **CONVERTISSEUR DE TENSION CONTINUE ET PROCÉDÉ DE COMMANDE ASSOCIÉ**
GLEICHSPANNUNGSWANDLER UND ZUGEHÖRIGES STEUERUNGSVERFAHREN
DC VOLTAGE CONVERTER AND ASSOCIATED CONTROL METHOD

(30) Priorité: 12.09.2014 FR 1458573
(43) Date de publication de la demande: 26.07.2017
(73) Titulaire: Valeo Electrification, 95800 Cergy (FR)
(72) Inventeur: DE SOUSA, Luis, GU22 7PZ WOKING (GB)
(74) Mandataire: Valeo Powertrain Systems
(86) Numéro de dépôt international: PCT/FR2015/052436
(87) Numéro de publication internationale: WO 2016/038318

(56) Documents cités:
- US-A- 6 069 799
- US-A1- 2004 174 147
- US-A1- 2005 047 175
- US-A1- 2012 201 053
- US-B2- 6 984 965

## Description

La présente invention concerne le domaine des convertisseurs de tension continue et notamment les convertisseurs de tension utilisés dans les véhicules automobiles.

En effet dans les véhicules automobiles et notamment les véhicules électriques ou véhicules hybrides, le véhicule comprend généralement une batterie liée à l'entraînement du véhicule qui délivre une tension supérieure ou égale à 60V tandis que de nombreux équipements de bord fonctionnent avec une alimentation comprise entre 12 et 14V de sorte qu'il est nécessaire d'utiliser un convertisseur de tension pour pouvoir alimenter les équipements avec la batterie liée à l'entraînement du véhicule.

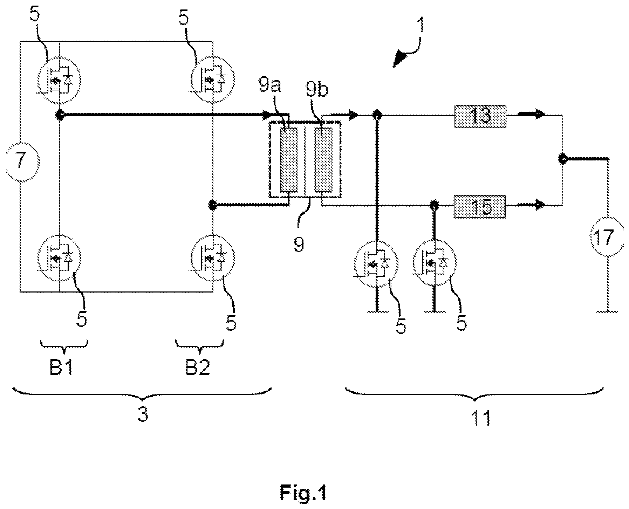

Afin d'améliorer les convertisseurs de tension de l'état de la technique, une solution est d'améliorer le rendement en réduisant les pertes énergétiques. Une solution connue de l'état de la technique consiste à appliquer une commutation à tension nulle (« zero voltage switching (ZVS) » en anglais) de manière à réduire les pertes de commutation. Une telle technique est par exemple appliquée sur les circuits de type Full-Bridge. La figure 1 représente un exemple de convertisseur de tension continue obtenu à partir d'un circuit Full-Bridge. Ce convertisseur 1 comprend un circuit haute tension 3 comprenant un pont de deux branches B1 et B2 comprenant chacune deux interrupteurs 5 en série, les extrémités des branches B1 et B2 étant reliées à une source haute tension 7. Le point milieu des branches est relié respectivement à une première et une deuxième extrémité de l'enroulement primaire 9a d'un transformateur 9. Le circuit basse tension 11 du convertisseur 1 comprend une première 13 et une deuxième 15 inductances reliées d'une part à la borne positive de la source basse tension 17 et d'autre part respectivement à une première et une deuxième extrémité de l'enroulement secondaire 9b du transformateur 9. Le circuit basse tension 11 comprend également un premier et un deuxième interrupteur 5 reliés d'une part à la masse et d'autre part respectivement au premier et à la deuxième extrémité de l'enroulement secondaire 9b du transformateur 9.

Par ailleurs, notamment dans le cadre de véhicules automobiles, il convient de réduire l'encombrement et le coût des divers équipements et donc des convertisseurs de tension. Or, une telle amélioration est difficile avec les composants magnétiques car ils nécessitent généralement des bobines en ferrite dont les possibilités d'intégration sont faibles.

De plus, la demande de brevet US6069799A décrit un transformateur comprenant un enroulement primaire, un seul enroulement secondaire, et un enroulement d'entraînement. L'enroulement d'entraînement est enroulé sur le transformateur et couplé entre deux commutateurs de redresseur synchrones.

Ainsi, la présente invention vise non seulement à améliorer le rendement des convertisseurs de tension de l'état de la technique mais aussi à réduire l'encombrement et le coût des convertisseurs.

A cet effet l'invention concerne un convertisseur de tension tel que défini dans la revendication 1. L'invention est définie dans le jeu de revendications annexé .

Selon un aspect supplémentaire de la présente invention, l'enroulement secondaire vers lequel le composant magnétique agit comme un transformateur dépend de la tension fournie au niveau de l'enroulement primaire.

Autrement dit, en fonction de la tension fournie au niveau de l'enroulement primaire, le composant magnétique fonctionne comme un transformateur soit vers le ou les premiers enroulements secondaires, soit vers le ou les deuxièmes enroulements secondaires.

Selon un autre aspect de la présente invention, le composant magnétique comprend un circuit magnétique en forme générale de huit non fermé comprenant une première boucle avec un premier entrefer, une deuxième boucle avec un deuxième entrefer et une partie centrale commune à la première et la deuxième boucle, l'enroulement primaire étant enroulé autour de la partie centrale, le premier enroulement secondaire étant enroulé autour de la première boucle, le deuxième enroulement secondaire étant enroulé autour de la deuxième boucle.

Selon un aspect supplémentaire de la présente invention, le composant magnétique comprend un premier et un second circuit magnétique distinct du premier, l'enroulement primaire étant enroulé à la fois autour du premier et du second circuits magnétiques, le premier enroulement secondaire étant enroulé autour du premier circuit magnétique et le second enroulement secondaire étant enroulé autour du second circuit magnétique.

En particulier, chaque circuit magnétique est en forme d'anneau, par exemple circulaire ou rectangulaire.

Selon un aspect additionnel de la présente invention, le premier et le deuxième circuits magnétiques comprennent respectivement un entrefer.

Selon un aspect de la présente invention, le circuit secondaire du composant magnétique comprend au moins deux premiers enroulements secondaires en parallèle et au moins deux seconds enroulements secondaires en parallèle.

Selon un aspect particulier, le circuit magnétique du composant magnétique comprend en outre :
- au moins une première barre autour de laquelle un premier enroulement secondaire est enroulé, la dite première barre comprenant un entrefer et étant reliée à la première boucle de sorte que les premiers enroulements secondaires sont parallèles entre eux ;
- au moins une deuxième barre autour de laquelle un deuxième enroulement secondaire est enroulé, la dite deuxième barre comprenant un entrefer et étant reliée à la deuxième boucle de sorte que les deuxièmes enroulements secondaires sont parallèles entre eux.

En particulier, la ou les premières barres sont symétriques à la ou aux deuxième barres par rapport à la partie centrale.

Selon, un autre aspect particulier, le premier circuit magnétique comprend au moins deux premières barres autour desquelles un premier enroulement secondaire respectif est enroulé, les dites premières barres étant reliées de sorte que les premiers enroulements secondaires sont parallèles entre eux ; le second circuit magnétique comprend au moins deux secondes barres autour desquelles un deuxième enroulement secondaire respectif est enroulé, les dites deuxièmes barres étant reliées de sorte que les deuxièmes enroulements secondaires sont parallèles entre eux.

En particulier, les premières barres sont symétriques aux deuxièmes barres par rapport à la partie des premier et second circuits magnétiques autour de laquelle l'enroulement primaire est positionné. Notamment, les premières et deuxièmes barres comprennent chacune un entrefer.

Selon un autre aspect de la présente invention, le circuit haute tension comprend un pont en H comprenant deux branches montées en parallèles et comprenant chacune un élément de commutation haut et un élément de commutation bas connectés en série, les extrémités des branches étant reliées aux bornes de la source haute tension et les points milieux des branches étant reliés respectivement à une première et une deuxième extrémité de l'enroulement primaire.

Selon un aspect supplémentaire de la présente invention, le circuit haute tension comprend une branche comprenant un élément de commutation haut et un élément de commutation bas en série, les extrémités de la branche étant reliées respectivement à une borne positive et une borne négative de la source haute tension, le point milieu de la branche étant relié à une première extrémité de l'enroulement primaire, la deuxième extrémité de l'enroulement primaire étant reliée à la borne négative de la source haute tension via un condensateur.

Selon un aspect additionnel de la présente invention, le circuit basse tension comprend un premier et un second éléments de commutation reliés respectivement au premier et au second enroulements secondaires d'une part et à la masse d'autre part.

Selon un autre aspect de la présente invention, le circuit basse tension comprend une première et une seconde diodes reliées respectivement au premier et au second enroulements secondaires d'une part et à la masse d'autre part.

Selon un aspect supplémentaire de la présente invention, le premier et le deuxième enroulements secondaires sont reliés à une borne positive de la source basse tension, la borne négative de la source basse tension étant reliée à la masse.

Selon un aspect additionnel de la présente invention, les éléments de commutation comprennent des transistors dont le type est compris dans la liste suivante :
- MOSFET ;
- IGBT ;
- JFET ;
- transistor bipolaire.

Selon un autre aspect de la présente invention, les éléments de commutation comprennent une diode montée en antiparallèle du transistor.

Selon un aspect supplémentaire de la présente invention, les éléments de commutation du circuit haute tension comprennent un condensateur monté en parallèle du transistor et de la diode.

La présente invention concerne également un procédé de commande d'un convertisseur de tension dans lequel les éléments de commutation du circuit haute tension sont pilotés de manière cyclique de sorte que lors d'une première partie de cycle, pour la première branche, l'élément de commutation haut relié à la borne positive de la source haute tension est en position fermée et l'élément de commutation bas relié à la borne négative de la source haute tension est en positon ouverte tandis que pour la seconde branche, l'élément de commutation haut relié à la borne positive de la source haute tension est en position ouverte et l'élément de commutation bas relié à la borne négative de la source haute tension est en position fermée et lors d'une deuxième partie de cycle, pour la première branche, l'élément de commutation haut relié à la borne positive de la source haute tension est en position ouverte et l'élément de commutation bas relié à la borne négative de la source haute tension est en positon fermée tandis que pour la seconde branche, l'élément de commutation haut relié à la borne positive de la source haute tension est en position fermée et l'élément de commutation bas relié à la borne négative de la source haute tension est en position ouverte.

La présente invention concerne également un procédé de commande d'un convertisseur de tension dans lequel les éléments de commutation du circuit haute tension sont pilotés de manière cyclique de sorte que lors d'une première partie de cycle, l'élément de commutation haut relié à la borne positive de la source haute tension est en position fermée et l'élément de commutation bas relié à la borne négative de la source haute tension est en positon ouverte et lors d'une deuxième partie de cycle, l'élément de commutation haut relié à la borne positive de la source haute tension est en position ouverte et l'élément de commutation bas relié à la borne négative de la source haute tension est en positon fermée.

Selon un aspect supplémentaire des procédés selon l'invention, les éléments de commutation du circuit basse tension sont synchronisés avec les éléments de commutation du circuit haute tension de sorte que l'élément de commutation du circuit basse tension relié à un enroulement secondaire est fermé lorsque ledit enroulement secondaire transfère de l'énergie vers la source basse tension.

Le procédé selon l'invention peut comprendre l'une quelconque des caractéristiques décrites précédemment en relation avec le convertisseur selon l'invention et qui lui sont compatibles.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- la figure 1 représente un schéma électrique d'un convertisseur de tension selon un mode de réalisation de l'état de la technique ;
- la figure 2 représente un schéma simplifié d'un convertisseur de tension selon la présente invention ;
- la figure 3 représente un schéma électrique d'un convertisseur de tension selon un premier mode de réalisation de la présente invention ;
- la figure 4 représente un schéma électrique d'un convertisseur de tension selon un deuxième mode de réalisation de la présente invention ;
- la figure 5 représente un circuit électrique équivalent d'un convertisseur de tension selon la présente invention ;
- la figure 6 représente un fonctionnement du circuit électrique équivalent de la figure 5 durant un premier cycle ;
- la figure 7 représente un fonctionnement du circuit électrique équivalent de la figure 5 durant un deuxième cycle ;
- la figure 8 représente un fonctionnement du circuit électrique équivalent de la figure 5 durant une phase de transition entre le premier et le deuxième cycle ;
- Les figures 9a, 9b, 9c, 9d et 9e représentent des schémas des différentes configurations d'un composant magnétique selon la présente invention.

Sur ces figures, les mêmes numéros de référence désignent des éléments identiques.

Dans la description qui va suivre, on désigne de façon générale:
Le terme «non couplés magnétiquement» pour définir un premier et un deuxième enroulements, signifie qu'une variation de tension au niveau du premier enroulement n'entraîne pas de variation de tension au niveau du deuxième enroulement et inversement;
Le terme « haute tension » pour désigner un circuit électrique, correspond à un circuit dans lequel la tension peut dépasser 48Volts, voire 60Volts ;
Le terme « basse tension » pour désigner un circuit électrique, correspond à un circuit dans lequel la tension maximale ne dépasse pas 48Volts, voire 60 Volts ;
Le terme « DC » correspond à l'acronyme de l'anglais « direct current » et signifie courant continu ;
Le terme « IGBT » correspond à l'acronyme de l'anglais « Insulated Gate Bipolar Transistor » et désigne un transistor bipolaire à grille isolée ;
Le terme « MOSFET » correspond à l'acronyme de l'anglais « Metal Oxyde Semiconductor Field Effect Transistor » et désigne un transistor à effet de champ à métal oxyde semi-conducteur ;
Le terme « JFET » correspond à l'acronyme anglais « Junction Field Effect Transistor » et est un transistor à effet de champ dont la grille est directement en contact avec le canal.

L'idée de la présente invention est de regrouper les composants magnétiques d'un convertisseur de tension DC/DC dans un unique composant magnétique capable de réaliser les fonctions de transfert et de stockage d'énergie.

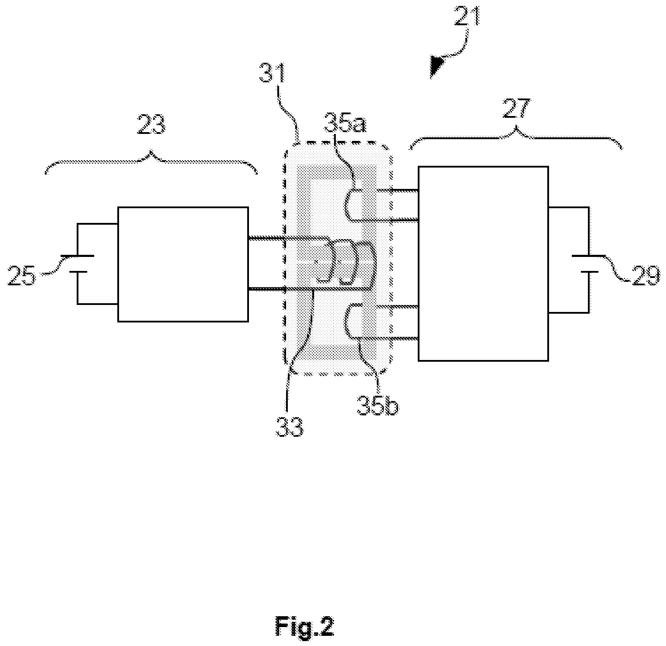

La figure 2 représente un schéma général d'un convertisseur de tension DC/DC selon la présente invention. Le convertisseur de tension 21 comprend un circuit haute tension 23 comprenant une source haute tension 25, un circuit basse tension 27 comprenant une source basse tension 29 et un composant magnétique 31 reliant le circuit haute tension 23 et le circuit basse tension 27. Le composant magnétique 31 comprend un circuit primaire avec un enroulement primaire 33 relié au circuit haute tension 23 et un circuit secondaire avec deux enroulements secondaires 35a et 35b reliés au circuit basse tension 27. Les deux enroulements secondaires 35a et 35b sont couplés magnétiquement à l'enroulement primaire 33 mais ne sont pas couplés magnétiquement entre eux.

Les différentes configurations du circuit haute tension 23 et du circuit basse tension 27 permettant le fonctionnement du convertisseur de tension 1 vont maintenant être décrites en détails.

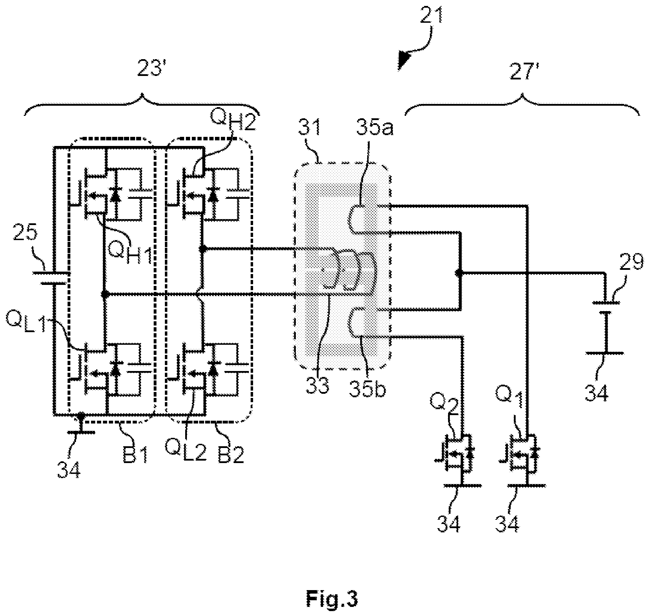

La figure 3 représente un premier mode de réalisation du convertisseur de tension 21 dans lequel le circuit haute tension 23' comprend un pont en H comprenant une première et une deuxième branches B1 et B2 montées en parallèle, les extrémités des branches B1 et B2 étant reliées à la source haute tension 25. La première branche B1 comprend un élément de commutation haut noté Q_{H1} relié à la borne positive de la source haute tension 25 monté en série avec un élément de commutation bas noté Q_{L1} relié à la borne négative de la source haute tension 25. Le point milieu de la première branche B1 situé entre les éléments de commutation haut Q_{H1} et bas Q_{L1} est relié à une première extrémité de l'enroulement primaire 33 du composant magnétique 31. La deuxième branche B2 comprend un élément de commutation haut noté Q_{H2} relié à la borne positive de la source haute tension 25 monté en série avec un élément de commutation bas noté Q_{L2} relié à la borne négative de la source haute tension 25. Le point milieu de la deuxième branche B2 situé entre les éléments de commutation haut Q_{H2} et bas Q_{L2} est relié à une deuxième extrémité de l'enroulement primaire 33 du composant magnétique 31. La borne négative de la source haute tension 25 est relié à la masse 34.

Le circuit basse tension 27' comprend un premier élément de commutation Q₁ disposé entre une première extrémité du premier enroulement secondaire 35a du composant magnétique 31 et la masse 34 et un deuxième élément de commutation Q₂ disposé entre une première extrémité du deuxième enroulement secondaire 35b du composant magnétique 33 et la masse 34. Les deuxièmes extrémités du premier et du deuxième enroulements secondaires 35a et 35b sont reliées à une borne positive de la source basse tension 29. La borne négative de la source basse tension 29 est reliée à la masse 34.

Les éléments de commutation Q_{H1}, Q_{H2}, Q_{L1}, Q_{L2}, Q₁ et Q₂ comprennent par exemple un transistor de type IGBT, MOSFET, JFET ou bipolaire, une diode montée en antiparallèle du transistor et un condensateur monté en parallèle du transistor et de la diode cependant d'autre type de transistor ou interrupteur commandable connu de l'homme du métier peuvent également être utilisé dans le cadre de la présente invention. Par ailleurs, il est à noter que ces diodes et ces condensateurs peuvent être des composants rajoutés ou des composants parasites intrinsèques au transistor.

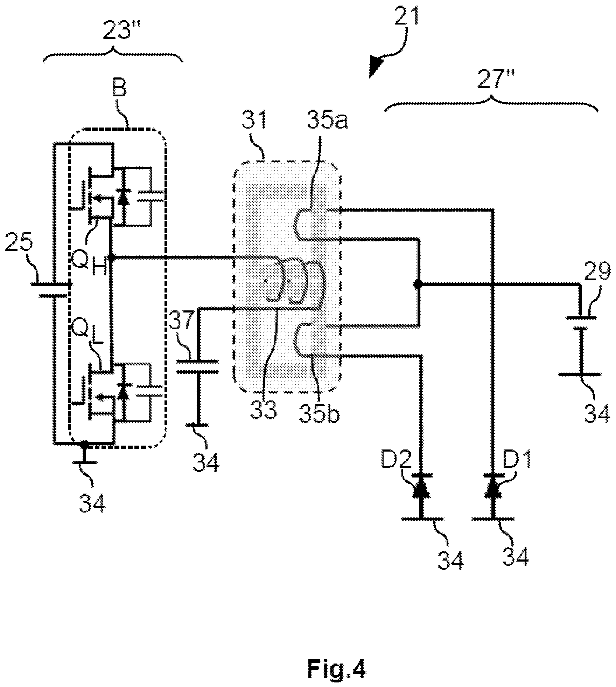

La figure 4 représente un deuxième mode de réalisation du convertisseur de tension 21 dans lequel le circuit haute tension 23" comprend une branche B comprenant un élément de commutation haut Q_{H} relié à la borne positive de la source haute tension 25 en série avec un élément de commutation bas Q_{L} relié à la borne négative de la source haute tension 25. La borne négative de la source haute tension 25 est reliée à la masse 34. Le point milieu de la branche B situé entre l'élément de commutation haut Q_{H} et l'élément de commutation bas Q_{L} est relié à une première extrémité de l'enroulement primaire 33. La deuxième extrémité de l'enroulement primaire 33 est reliée à la masse via un condensateur 37.

Le circuit basse tension 27" comprend une première diode D₁ disposée entre une première extrémité du premier enroulement secondaire 35a du composant magnétique 31 et la masse 34 et une deuxième diode D₂ disposée entre une première extrémité du deuxième enroulement secondaire 35b du composant magnétique 33 et la masse 34. Les deuxièmes extrémités du premier et du deuxième enroulements secondaires 35a et 35b sont reliées à une borne positive de la source basse tension 29. La borne négative de la source basse tension 29 est reliée à la masse 34.

Le premier et le deuxième modes de réalisation présentés précédemment à partir des figures 3 et 4 peuvent être combinés de sorte que le circuit haute tension 23' de la figure 3 peut être combiné avec le circuit basse tension 27" de la figure 4 de même que le circuit haute tension 23" de la figure 4 peut être combiné avec le circuit basse tension 27' de la figure 3, l'élément magnétique 31 étant le même pour tous les modes de réalisation.

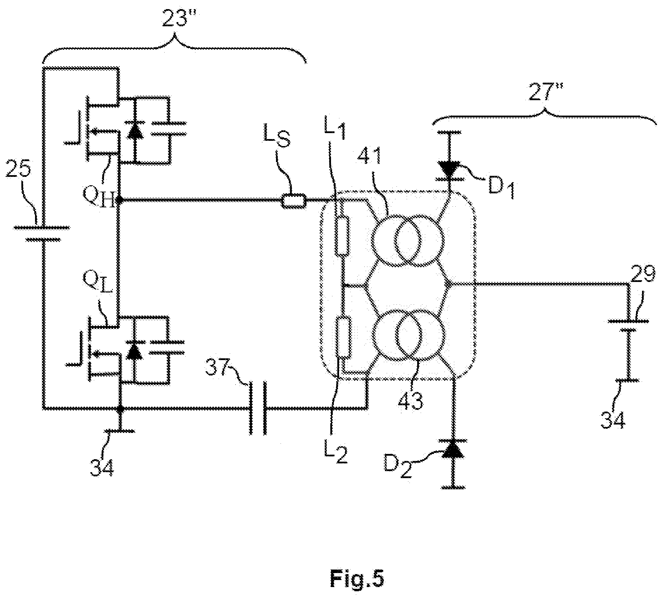

Le fonctionnement du convertisseur de tension 21, et notamment du composant magnétique 31, va maintenant être décrit. Le fonctionnement est le même quelle que soit la configuration des circuits haute tension 23 et basse tension 27. Le composant magnétique 31 fonctionne d'une manière similaire à un double transformateur en série représenté sur la figure 5 et modélisé par un premier transformateur parfait 41 et une première inductance magnétisante L₁ branchée sur les bornes du primaire du premier transformateur parfait 41 ; et un deuxième transformateur parfait 43 et une deuxième inductance magnétisante L₂ branchée sur les bornes du primaire du deuxième transformateur parfait 43. La modélisation comprend également une inductance parasite notée L_{S} aussi appelée inductance de fuite. La configuration des circuits haute tension 23" et basse tension 27" de la figure 5 correspond à la configuration de la figure 4 décrite précédemment.

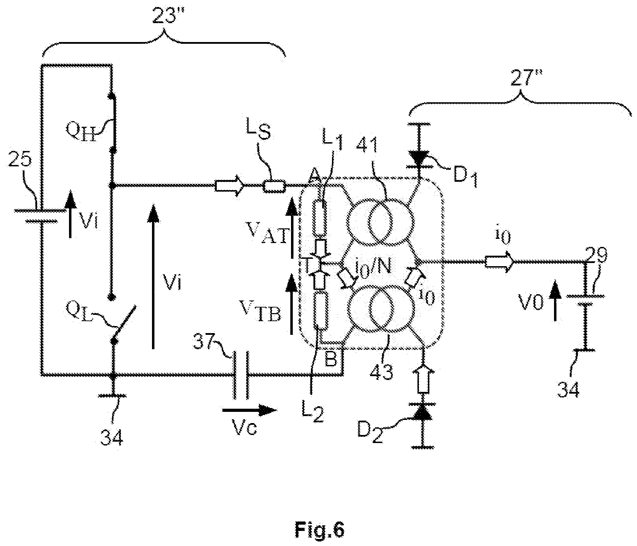

Le fonctionnement du convertisseur de tension 21 va donc être décrit à partir du schéma équivalent de la figure 5. Le fonctionnement comprend un premier cycle pendant une durée αT où α est le rapport cyclique appliqué à l'élément de commutation haut Q_{H} et T une période de référence. Dans le premier cycle, le convertisseur de tension est dans un premier état représenté sur la figure 6 où l'élément de commutation haut Q_{H} est passant tandis que l'élément de commutation bas Q_{L} est ouvert. Sur la figure 6, les tensions et courants sont représentés par des flèches. Cet état implique que la tension Vi de la source haute tension 25 est appliquée entre le point milieu de la branche B et la masse 34. La tension aux bornes du condensateur 37 est notée Vc pendant ce premier cycle et vaut α*Vi en moyenne. La tension appliquée aux primaires des transformateurs 41 et 43, c'est-à-dire entre les points A et B vaut V_{AB}=Vi-Vc. Cette tension V_{AB} est positive de sorte que la tension reflétée au secondaire est également positive et bloque la première diode D1. Le premier transformateur 41 se comporte donc comme un interrupteur ouvert. La tension aux bornes de la source basse tension 29 est notée V₀ et le courant qui la parcourt est noté i₀. Ainsi, le courant circulant au niveau du secondaire du deuxième transformateur vaut i₀ et le courant circulant dans le primaire du deuxième transformateur est i₀/N où N est le rapport entre le nombre de spires du primaire et du secondaire du deuxième transformateur 43. Ce rapport N correspond au rapport entre le nombre de spires de l'enroulement primaire 33 et du second enroulement secondaire 35b. La diode D2 étant passante, la tension aux bornes du secondaire du deuxième transformateur 43 vaut V₀. La tension aux bornes du primaire du deuxième transformateur 43 notée V_{TB} vaut donc N*V₀. On a donc d'une part la tension V_{AT} aux bornes de du primaire du premier transformateur 41 qui vaut V_{Ar}=Vi-N*V₀-α*Vi qui permet un stockage d'énergie au niveau de l'inductance magnétisante L₁ du premier transformateur parfait 41 et d'autre part la tension V_{TB} aux bornes du primaire du deuxième transformateur 43 qui vaut V_{TB}=N*V₀ qui est transférée vers le circuit basse tension via le deuxième transformateur.

Dans le cas d'un montage à pont en H de la figure 3, le premier état, correspondant au premier cycle, correspond à la fermeture de l'élément de commutation haut Q_{H1} de la première branche B1 et de l'élément de commutation bas Q_{L2} de la deuxième branche B2 et à l'ouverture de l'élément de niveau bas Q_{L1} de la première branche B1 et de l'élément de commutation haut Q_{H2} de la deuxième branche B2. Au niveau du circuit basse tension, l'élément de commutation Q1 est ouvert tandis que l'élément de commutation Q2 est fermé pendant ce premier cycle dans lequel l'énergie est transférée au circuit basse tension par l'intermédiaire du deuxième enroulement secondaire 35b.

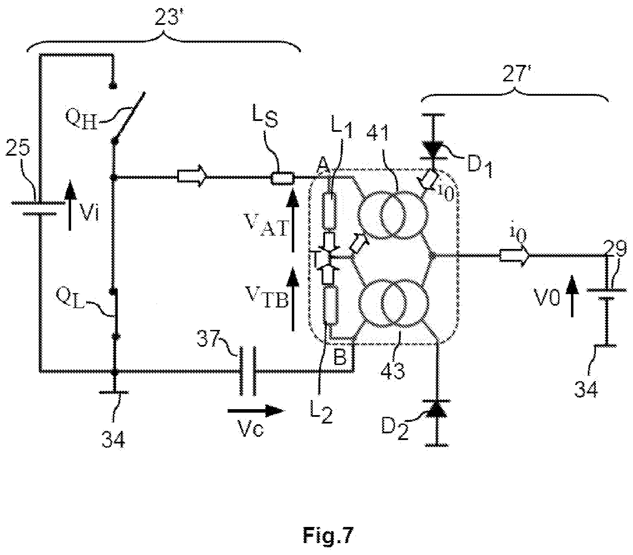

Durant un deuxième cycle pendant une durée (1-α)T environ, le convertisseur est dans un deuxième état représenté sur la figure 7 où l'élément de commutation haut Q_{H} est ouvert tandis que l'élément de commutation bas Q_{L} est passant ou fermé. Cet état implique que la source haute tension 25 n'alimente plus les primaires des transformateurs 41 et 43. La tension appliquée aux primaires des transformateurs 41 et 43 est alors négative. La tension reflétée au secondaire est également négative de sorte que la première diode D1 est maintenant passante tandis que la deuxième diode D2 est bloquante. Le deuxième transformateur 43 se comporte alors comme un interrupteur ouvert. Le courant circulant au niveau du secondaire du premier transformateur 41 vaut I₀ ; la tension aux bornes du secondaire du premier transformateur 41 vaut -V₀ ; et la tension aux bornes du primaire du premier transformateur vaut donc -N'*V0. Ce rapport N' correspond au rapport entre le nombre de spires de l'enroulement primaire 33 et du premier enroulement secondaire 35a. En particulier, ce rapport N' est égal au rapport N relatif au deuxième secondaire. On a donc d'une part la tension V_{AT} aux bornes du primaire du premier transformateur 41 qui vaut V_{AT}=-N*VO et qui permet un transfert d'énergie vers le circuit basse tension via le premier transformateur et d'autre part la tension V_{TB} aux bornes du primaire du deuxième transformateur 43 qui vaut V_{TB}=N*V₀-Vc, et qui est stockée au niveau de l'inductance magnétisante L2.

Dans le cas d'un montage à pont en H de la figure 3, le deuxième état, correspondant au deuxième cycle, correspond à l'ouverture de l'élément de commutation haut Q_{H1} de la première branche B1 et de l'élément de commutation bas Q_{H2} de la deuxième branche B2 et à la fermeture de l'élément de niveau bas Q_{L1} de la première branche et de l'élément de commutation haut Q_{H2} de la deuxième branche B2. Au niveau du circuit basse tension, l'élément de commutation Q1 est fermé tandis que l'élément de commutation Q2 est ouvert pendant ce deuxième cycle dans lequel l'énergie est transférée au circuit basse tension par l'intermédiaire du premier enroulement secondaire 35a.

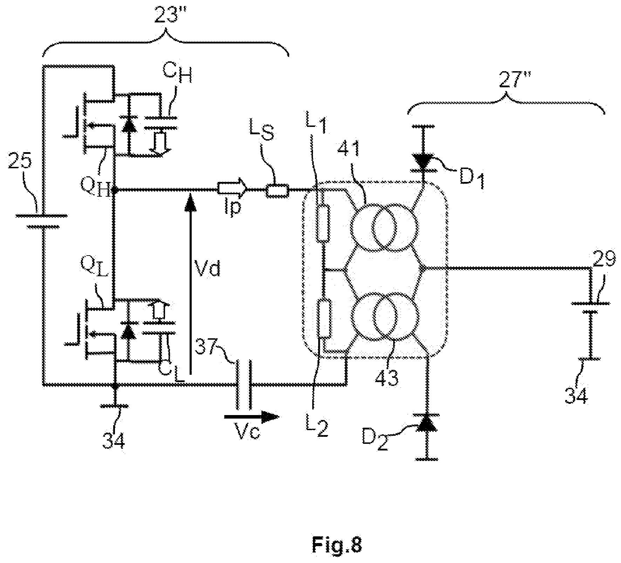

Par ailleurs, afin de réduire les pertes de commutation, lors du passage de la configuration du premier état représenté en figure 6 au deuxième état représenté en figure 7, c'est-à-dire entre les deux cycles, les éléments de commutation haut et bas (dans le mode de réalisation de la figure 3, tous les éléments de commutation du circuit haute tension 23') sont ouverts simultanément pendant un temps prédéterminé de manière à obtenir une tension de commutation nulle. Cet état de transition va être décrit à partir de la figure 8. En effet, lorsque l'élément de commutation haut Q_{H} passe en position ouverte à la fin du premier cycle, le courant Ip dans la boucle du circuit haute tension 23" est imposé par la première inductance de magnétisation L1 et charge le condensateur C_{H} de l'élément de commutation haut Q_{H} et décharge le condensateur C_{L} de l'élément de commutation bas Q_{L}. Ainsi, les condensateurs C_{H} et C_{L} permettent de contrôler les temps de montée de la tension aux bornes de l'élément de commutation bas Q_{L} afin que le courant dans l'élément de commutation bas Q_{L} s'annule pendant que la tension à ses bornes reste faible de manière à obtenir une commutation à tension nulle (« Zero Voltage Switching (ZVS) » en anglais).

Lorsque les deux éléments de commutation Q_{H} et Q_{L} du circuit haute tension 23" sont ouverts, la tension Vd entre le point milieu et la masse 34 décroit jusqu'à ce qu'elle soit égale à Vc. La tension aux bornes du deuxième transformateur idéal 43 est imposée par le secondaire, c'est-à-dire par le circuit basse tension 27" et vaut N*V₀ car la deuxième diode D2 est passante. La somme des tensions aux bornes du premier et du deuxième transformateur devant être nulle (pour obtenir Vd=Vc), la tension aux bornes du premier transformateur est donc -N*V0. La première diode D1 peut être passante mais à ce stade la diode D2 fournit tout le courant au circuit basse tension et D1 aucun car le partage de courant entre les deux diodes D1 et D2 n'a pas de raison de varier. En revanche, la tension Vd continue de diminuer car l'inductance L1 impose toujours la charge de C_{H} et la décharge de C_{L}, le courant diminue alors rapidement. En effet, la tension aux bornes des transformateurs 41 et 43 est toujours de 0 Volts. La tension aux bornes de l'inductance parasite Ls notée V_{LS} va alors prendre la valeur de la différence entre Vd et Vc, on a donc V_{LS}=Vd-Vc. Cette tension négative fait baisser rapidement le courant dans le premier transformateur 41. Cependant, les inductances magnétisantes L1 et L2 ayant des valeurs à priori nettement supérieures à l'inductance de fuite Ls, les courants dans les inductances magnétisantes ne varieront que très peu et les courants magnétisants des inductances L1 et L2 sont contraints de s'écouler vers les enroulements secondaires. Une fois que le condensateur C_{H} est chargé et la condensateur C_{L} est déchargé, la tension aux bornes de l'élément de commutation bas Q_{H} est nulle et l'élément de commutation bas Q_{L} peut être fermé pour lancer le deuxième cycle.

De manière similaire, le passage du deuxième cycle au premier cycle nécessite une phase de transition pour obtenir une commutation à tension nulle.

La période T, le rapport cyclique α et le temps de transition entre le premier et le deuxième cycle décrits précédemment sont déterminés en fonction des caractéristiques des différents composants du convertisseur de tension 21.

Ainsi, l'utilisation d'un composant magnétique 31 comprenant un enroulement primaire 33 et deux enroulements secondaires 35a et 35b couplés magnétiquement à l'enroulement primaire 33 mais non couplés magnétiquement entre eux permet d'obtenir le même fonctionnement que deux transformateurs indépendants montés en série. Un tel composant magnétique 31 permet donc à la fois de stocker de l'énergie dans l'inductance magnétisante de l'enroulement primaire 33 tout en transférant de l'énergie vers les enroulements secondaires 35a et 35b, vers le deuxième enroulement secondaire 35b durant le premier cycle et vers le premier enroulement secondaire 35a durant le deuxième cycle.

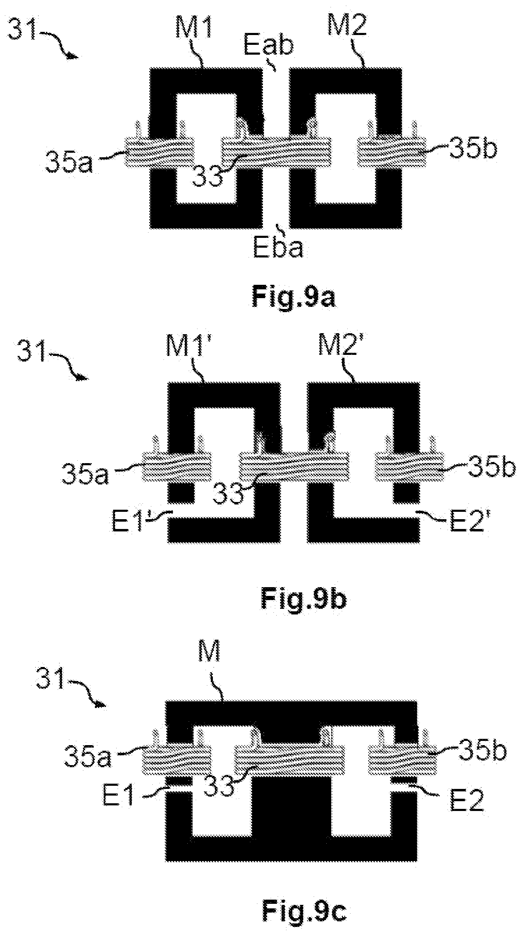

Les différentes configurations permettant d'obtenir un composant magnétique 31 permettant un couplage magnétique entre l'enroulement primaire 33 et les enroulements secondaires 35a et 35b sans qu'il n'y ait de couplage magnétique entre les enroulements secondaires 35a et 35b vont maintenant être décrites à partir des figures 9a à 9c.

Selon un premier mode de réalisation représenté sur la figure 9a, le composant magnétique 31 comprend un premier M1 et un second M2 circuit magnétique distinct du premier M1, l'enroulement primaire 33 étant enroulé à la fois autour du premier M1 et du second M2 circuits magnétiques, le premier enroulement secondaire 35a étant enroulé autour du premier circuit magnétique M1 et le second enroulement secondaire 35b étant enroulé autour du second circuit magnétique M2. Ainsi, le chemin magnétique reliant le premier 35a et le deuxième 35b enroulement secondaire comprend un premier entrefer noté Eab au passage du premier M1 au second M2 circuit magnétique puis un deuxième entrefer noté Eba pour le passage du second M2 au premier M1 circuit magnétique.

Selon un deuxième mode de réalisation représenté sur la figure 9b, le composant magnétique comprend un premier M1' et un second M2' circuit magnétique distinct du premier M1', le premier M1' et le deuxième M2' circuits magnétiques comprenant un entrefer notés respectivement E1' et E2'. L'enroulement primaire 33 étant enroulé à la fois autour du premier M1' et du second M2' circuits magnétiques, le premier enroulement secondaire 35a étant enroulé autour du premier circuit magnétique M1' et le second enroulement secondaire 35b étant enroulé autour du second circuit magnétique M2'. Ainsi, le chemin magnétique reliant le premier 35a et le deuxième 35b enroulement secondaire comprend un premier entrefer E2' au niveau du deuxième circuit magnétique M2', un deuxième entrefer au passage du second M2' au premier M1' circuit magnétique, un troisième entrefer E1' au niveau du premier circuit magnétique M1' et un quatrième entrefer au passage du premier M1' au second M2'.

Selon un troisième mode de réalisation représenté sur la figure 9c,le composant magnétique 31 comprend un circuit magnétique en forme générale de huit non fermé comprenant une première boucle avec un premier entrefer noté E1, une deuxième boucle avec un deuxième entrefer noté E2 et une partie centrale commune à la première et la deuxième boucle, l'enroulement primaire 33 étant enroulé autour de la partie centrale, le premier enroulement secondaire 35a étant enroulé autour de la première boucle, le deuxième enroulement secondaire 35b étant enroulé autour de la deuxième boucle. Ainsi, le chemin magnétique reliant le premier S1 et le deuxième S2 enroulement secondaire comprend un premier entrefer E2 et un deuxième entrefer E1.

Les circuits magnétiques M1, M2 et M des différents modes de réalisation sont par exemple réalisés en ferrite de préférence mais d'autres matériaux tels que le fer-silicium, la poudre de fer, le Nickel-Fer, le nanocristallin ou les métaux amorphes sont possibles et ont par exemple une forme allant d'une forme à angle droit (carré, rectangle...) à une forme circulaire en passant par des formes à angles différents ou ovales. Le nombre de spires de l'enroulement primaire 33 et des enroulements secondaires 35a et 35b est choisi en fonction des tensions de la source haute tension 25 et de la source basse tension 29.

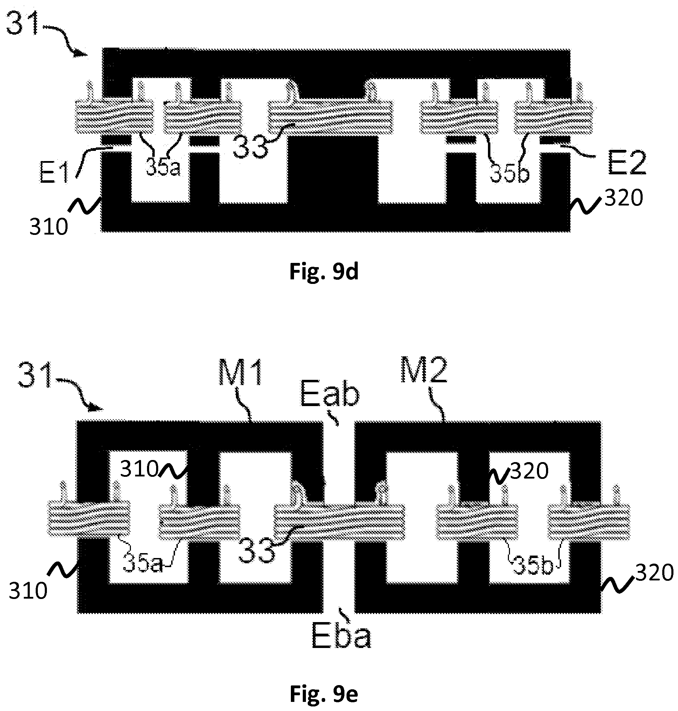

Selon une variante des premier, deuxième et troisième modes de réalisation illustrée en figures 9d et 9e, le circuit secondaire du composant magnétique 31 comprend au moins deux premiers enroulements secondaires 35a en parallèle et au moins deux seconds enroulements secondaires 35b en parallèle.

Dans des applications ou le courant circulant dans le convertisseur de tension 21 est élevé, par exemple supérieur à 100A, voire supérieur à 200A, il est préférable d'utiliser plusieurs premières diodes D1, respectivement plusieurs diodes D2, en parallèle dans le circuit basse tension 27" pour répartir le courant sur plusieurs diodes et ainsi limiter les pertes par effet joule. Cependant, il peut arriver que le courant passe préférentiellement dans une des diodes parallèles, du fait par exemple d'une variabilité dans les spécifications des diodes. Généralement, la chute de tension de la diode D1, D2 diminue avec la température, ce qui peut conduire à un emballement thermique : plus la tension chute, plus le courant sera dérivé vers la diode avec la plus faible chute et donc plus sa température monte. Prévoir plusieurs enroulements secondaires en parallèle, chacune ayant sa diode respective, permet d'éviter ce problème. Les courants circulant dans les premiers enroulements secondaires en parallèle sont moins sujet à variation d'un enroulement à l'autre. Il en est de même pour les deuxièmes enroulements secondaires parallèles. Ainsi, les diodes subissent un courant sensiblement égal et ont un vieillissement uniforme.

Cette variante a été décrite avec des diodes D1, D2 dans le circuit basse tension 27". Cependant, les diodes D1, D2 pourraient être remplacées par des interrupteurs Q1, Q2, le convertisseur selon cette variante présentant alors des avantages similaires à ceux décrits précédemment.

L'exemple illustré en figure 9d est similaire au composant magnétique de la figure 9c, si ce n'est que le circuit magnétique M comprend en outre une première barre 310 et une deuxième barre 320 reliées respectivement à la première et la deuxième boucle. Les première et deuxième barres 310, 320 portent respectivement un premier enroulement 35a et un deuxième enroulement secondaire 35b. Chaque barre 310, 320 comprend un entrefer E1, E2.

L'exemple illustré en figure 9e est similaire au composant magnétique de la figure 9a, si ce n'est que les premier M1 et deuxième M2 circuits magnétiques comprennent respectivement deux premières barres 310 et deux secondes barres 320. Les première et deuxième barres 310, 320 portent respectivement un premier enroulement 35a et un deuxième enroulement secondaire 35b.

Comme dans l'exemple illustré en figure 9b, le composant magnétique de la figure 9d pourrait comprendre un premier entrefer E2' au niveau du deuxième circuit magnétique M2' et un troisième entrefer E1' au niveau du premier circuit magnétique M1'.

Ainsi, l'utilisation d'un composant magnétique 31 comprenant un enroulement primaire 33 et deux enroulements secondaires 35a et 35b dans un convertisseur de tension DC/DC 21 permet de réaliser les fonctions de transfert d'énergie entre le primaire et le secondaire ainsi que le stockage d'énergie ce qui permet de remplacer un transformateur et deux inductances par un unique composant rassemblant tous les éléments magnétiques du convertisseur. Un tel composant magnétique 31 permet donc non seulement de réduire le coût du convertisseur en réduisant le nombre de composants et notamment les composants comprenant de la ferrite, mais aussi de réduire l'encombrement du convertisseur en permettant d'obtenir un convertisseur plus compact. Ces deux avantages répondent donc aux exigences du marché automobile et un tel composant magnétique peut notamment être utilisé dans les véhicules hybrides ou électriques comprenant une source haute tension pour alimenter le moteur et une source basse tension pour alimenter les équipements de bord.

## Revendications

1. Convertisseur de tension continue (21) comprenant :
- un composant magnétique (31) permettant un transfert d'énergie entre un circuit primaire et un circuit secondaire,
- un circuit haute tension (23, 23', 23") reliant une source haute tension (25) au circuit primaire du composant magnétique (31),
- un circuit basse tension (27, 27', 27") reliant le circuit secondaire du composant magnétique (31) à une source basse tension (29),
le circuit primaire du composant magnétique (31) comprend un enroulement primaire (33) et en ce que le circuit secondaire du composant magnétique (31) comprend un premier (35a) et un second (35b) enroulements secondaires non couplés magnétiquement entre eux, lesdits premier (35a) et second (35b) enroulements secondaires étant couplés magnétiquement à l'enroulement primaire (33), et **caractérisé en ce que** le composant magnétique (31) est configuré :
- d'une part, pour transférer de l'énergie depuis l'enroulement primaire (33) uniquement vers le deuxième enroulement secondaire (35b) et non vers le premier enroulement secondaire (35a) durant un premier cycle, et pour transférer de l'énergie depuis l'enroulement primaire (33) uniquement vers le premier enroulement secondaire (35a) et non vers le deuxième enroulement secondaire (35b) durant un deuxième cycle, dans lequel un passage du premier cycle au deuxième cycle, ou un passage du deuxième cycle au premier cycle, nécessite une phase de transition pour obtenir une commutation à tension nulle ; et
- d'autre part, pour agir comme une impédance qui stocke de l'énergie au niveau de l'enroulement primaire (33), l'enroulement primaire (33) et les enroulements secondaires (35a, 35b) du composant magnétique (31) étant reliés par au moins un circuit magnétique (M, M1, M2, M1', M2') et dans lequel un chemin magnétique reliant le premier et le deuxième enroulements secondaires comprend au moins deux entrefers.

2. Convertisseur de tension (21) selon la revendication 1 dans lequel l'enroulement secondaire (35a, 35b) vers lequel le composant magnétique agit comme un transformateur dépend de la tension fournie au niveau de l'enroulement primaire (33).

3. Convertisseur de tension (21) selon l'une quelconque des revendications précédentes, dans lequel le composant magnétique (31) comprend un circuit magnétique (M) en forme générale de huit non fermé comprenant une première boucle avec un premier entrefer (E1), une deuxième boucle avec un deuxième entrefer (E2) et une partie centrale commune à la première et la deuxième boucle, l'enroulement primaire (33) étant enroulé autour de la partie centrale, le premier enroulement secondaire (35a) étant enroulé autour de la première boucle, le deuxième enroulement secondaire (35b) étant enroulé autour de la deuxième boucle.

4. Convertisseur de tension (21) selon l'une quelconque des revendications précédentes, dans lequel le composant magnétique (31) comprend un premier (M1, M1') et un second circuit magnétique (M2, M2') distinct du premier, l'enroulement primaire (33) étant enroulé à la fois autour du premier (M1, M1') et du second (M2, M2') circuits magnétiques, le premier enroulement secondaire (35a) étant enroulé autour du premier circuit magnétique (M1, M1') et le second enroulement secondaire (35b) étant enroulé autour du second circuit magnétique (M2, M2').

5. Convertisseur de tension (21) selon la revendication 4 dans lequel le premier (M1') et le deuxième (M2') circuits magnétiques comprennent respectivement un entrefer (E1', E2').

6. Convertisseur de tension (21) selon l'une des revendications précédentes, dans lequel le circuit secondaire du composant magnétique (31) comprend au moins deux premiers enroulements secondaires (35a) en parallèle et au moins deux seconds enroulements secondaires (35b) en parallèle.

7. Convertisseur de tension (21) selon les revendications 3 et 7, dans lequel le circuit magnétique (M) du composant magnétique (31) comprend en outre :
- au moins une première barre (310) autour de laquelle un premier enroulement secondaire (35a) est enroulé, la dite première barre (310) comprenant un entrefer (E1) et étant reliée à la première boucle de sorte que les premiers enroulements secondaires (35a) sont parallèles entre eux ;
- au moins une deuxième barre (320) autour de laquelle un deuxième enroulement secondaire (35b) est enroulé, la dite deuxième barre (320) comprenant un entrefer (E2) et étant reliée à la deuxième boucle de sorte que les deuxièmes enroulements secondaires (35b) sont parallèles entre eux.

8. Convertisseur de tension (21) selon les revendications 4 ou 5, et la revendication 8, dans lequel :
- le premier circuit magnétique (M1) comprend au moins deux premières barres (310) autour desquelles un premier enroulement secondaire (35a) respectif est enroulé, les dites premières barres (35a) étant reliées de sorte que les premiers enroulements secondaires (35a) sont parallèles entre eux ;
- le second circuit magnétique (M2) comprend au moins deux secondes barres (320) autour desquelles un deuxième enroulement secondaire (35b) respectif est enroulé, les dites deuxièmes barres (320) étant reliées de sorte que les deuxièmes enroulements secondaires (35b) sont parallèles entre eux.

9. Convertisseur de tension (21) selon l'une des revendications précédentes dans lequel le circuit haute tension (23') comprend un pont en H comprenant deux branches (B1 et B2) montées en parallèles et comprenant chacune un élément de commutation haut (Q_{H1}, Q_{H2}) et un élément de commutation bas (Q_{L1}, Q_{L2}) connectés en série, les extrémités des branches (B1 et B2) étant reliées aux bornes de la source haute tension (25) et les points milieux des branches (B1 et B2) étant reliés respectivement à une première et une deuxième extrémité de l'enroulement primaire (33).

10. Convertisseur de tension (21) selon l'une des revendications 1 à 8 dans lequel le circuit haute tension (23") comprend une branche (B) comprenant un élément de commutation haut (Q_{H}) et un élément de commutation bas en série (Q_{L}), les extrémités de la branche (B) étant reliées respectivement à une borne positive et une borne négative de la source haute tension (29), le point milieu de la branche (B) étant relié à une première extrémité de l'enroulement primaire (33), la deuxième extrémité de l'enroulement primaire (33) étant reliée à la borne négative de la source haute tension (25) via un condensateur (37).

11. Procédé de commande d'un convertisseur de tension (21) selon la revendication 9 dans lequel les éléments de commutation (Q_{H}, Q_{L}, Q_{H1}, Q_{H2}, Q_{L1}, Q_{L2}) du circuit haute tension (23') sont pilotés de manière cyclique de sorte que lors d'une première partie de cycle, pour la première branche (B1), l'élément de commutation haut (Q_{H1}) relié à la borne positive de la source haute tension (25) est en position fermée et l'élément de commutation bas (Q_{L1}) relié à la borne négative de la source haute tension (25) est en positon ouverte tandis que pour la seconde branche (B2), l'élément de commutation haut (Q_{H2}) relié à la borne positive de la source haute tension (25) est en position ouverte et l'élément de commutation bas (Q_{L2}) relié à la borne négative de la source haute tension (25) est en position fermée et lors d'une deuxième partie de cycle, pour la première branche (B1), l'élément de commutation haut (Q_{H1}) relié à la borne positive de la source haute tension (25) est en position ouverte et l'élément de commutation bas (Q_{H2}) relié à la borne négative de la source haute tension (25) est en positon fermée tandis que pour la seconde branche (B2), l'élément de commutation haut (Q_{H2}) relié à la borne positive de la source haute tension (25) est en position fermée et l'élément de commutation bas (Q_{L2}) relié à la borne négative de la source haute tension (25) est en position ouverte.

12. Procédé de commande d'un convertisseur de tension (21) selon la revendication 10 dans lequel les éléments de commutation (Q_{H}, Q_{L}) du circuit haute tension (23") sont pilotés de manière cyclique de sorte que lors d'une première partie de cycle, l'élément de commutation haut (Q_{H}) relié à la borne positive de la source haute tension (25) est en position fermée et l'élément de commutation bas (Q_{L}) relié à la borne négative de la source haute tension (25) est en positon ouverte et lors d'une deuxième partie de cycle, l'élément de commutation haut (Q_{H}) relié à la borne positive de la source haute tension (25) est en position ouverte et l'élément de commutation bas (Q_{L}) relié à la borne négative de la source haute tension (25) est en positon fermée.

## Patentansprüche

1. Gleichspannungswandler (21) bestehend aus:
- einem magnetischen Bauteil (31), das eine Übertragung von Energie zwischen einem Primärkreis und einem Sekundärkreis ermöglicht,
- einem Hochspannungskreis (23, 23', 23"), der eine Hochspannungsquelle (25) mit dem Primärkreis des magnetischen Bauteils (31) verbindet,
- einem Niederspannungskreis (27, 27', 27"), der den Sekundärkreis des magnetischen Bauteils (31) mit einer Niederspannungsquelle (29) verbindet,
wobei der Primärkreis des magnetischen Bauteils (31) eine Primärwicklung (33) und dass der Sekundärkreis des magnetischen Bauteils (31) eine erste (35a) und zweite (35b) Sekundärwicklung aufweist, die nicht magnetisch miteinander gekoppelt sind, wobei die erste (35a) und zweite (35b) Sekundärwicklung magnetisch mit der Primärwicklung (33) gekoppelt sind und **dadurch gekennzeichnet, dass** das magnetische Bauteil (31) wie folgt konfiguriert ist:
- einerseits, um während eines ersten Zyklus Energie von der Primärwicklung (33) nur zur zweiten Sekundärwicklung (35b) und nicht zur ersten Sekundärwicklung (35a) zu übertragen, und um während eines zweiten Zyklus Energie von der Primärwicklung (33) nur zur ersten Sekundärwicklung (35a) und nicht zur zweiten Sekundärwicklung (35b) zu übertragen, wobei ein Übergang vom ersten Zyklus zum zweiten Zyklus oder ein Übergang vom zweiten Zyklus zum ersten Zyklus eine Übergangsphase erfordert, um ein Nullspannungsschalten zu erreichen; und
- andererseits, um als Impedanz zu wirken, die Energie in der Primärwicklung (33) speichert, wobei die Primärwicklung (33) und die Sekundärwicklungen (35a, 35b) des magnetischen Bauteils (31) durch mindestens einen Magnetkreis (M, M1, M2, M1', M2') verbunden sind und wobei ein die erste und die zweite Sekundärwicklung verbindender magnetischer Pfad mindestens zwei Luftspalte aufweist.

2. Spannungswandler (21) nach Anspruch 1, wobei die Sekundärwicklung (35a, 35b), zu der das magnetische Bauteil als Transformator wirkt, von der an der Primärwicklung (33) gelieferten Spannung abhängt.

3. Spannungswandler (21) nach einem der vorhergehenden Ansprüche, wobei das magnetische Bauteil (31) einen Magnetkreis (M) in der allgemeinen Form einer nicht geschlossenen Acht aufweist, der eine erste Schleife mit einem ersten Luftspalt (E1) aufweist, eine zweite Schleife mit einem zweiten Luftspalt (E2) und einen Mittelteil, der der ersten und der zweiten Schleife gemeinsam ist, wobei die Primärwicklung (33) um den Mittelteil gewickelt ist, die erste Sekundärwicklung (35a) um die erste Schleife gewickelt ist und die zweite Sekundärwicklung (35b) um die zweite Schleife gewickelt ist.

4. Spannungswandler (21) nach einem der vorhergehenden Ansprüche, wobei das magnetische Bauteil (31) einen ersten (M1, M1') aufweist und einen zweiten Magnetkreis (M2, M2'), der von dem ersten getrennt ist, wobei die Primärwicklung (33) sowohl um den ersten (M1, M1') als auch um den zweiten (M2, M2') Magnetkreis gewickelt ist, wobei die erste Sekundärwicklung (35a) um den ersten Magnetkreis (M1, M1') gewickelt ist und die zweite Sekundärwicklung (35b) um den zweiten Magnetkreis (M2, M2') gewickelt ist.

5. Spannungswandler (21) nach Anspruch 4, wobei der erste (M1') und der zweite (M2') Magnetkreis jeweils einen Luftspalt (E1', E2') aufweisen.

6. Spannungswandler (21) nach einem der vorhergehenden Ansprüche, wobei der Sekundärkreis des magnetischen Bauteils (31) mindestens zwei parallele erste Sekundärwicklungen (35a) und mindestens zwei parallele zweite Sekundärwicklungen (35b) aufweist.

7. Spannungswandler (21) nach den Ansprüchen 3 und 6, wobei der Magnetkreis (M) des magnetischen Bauteils (31) darüber hinaus Folgendes aufweist:
- mindestens einen ersten Stab (310), um den eine erste Sekundärwicklung (35a) gewickelt ist, wobei der erste Stab (310) einen Luftspalt (E1) aufweist und mit der ersten Schleife verbunden ist, so dass die ersten Sekundärwicklungen (35a) parallel zueinander sind;
- mindestens einen zweiten Stab (320), um den eine zweite Sekundärwicklung (35b) gewickelt ist, wobei der zweite Stab (320) einen Luftspalt (E2) aufweist und mit der zweiten Schleife verbunden ist, so dass die zweiten Sekundärwicklungen (35b) parallel zueinander sind.

8. Spannungswandler (21) nach den Ansprüchen 4 oder 5 und Anspruch 7, wobei:
- der erste Magnetkreis (M1) mindestens zwei erste Stäbe (310) aufweist, um die jeweils eine erste Sekundärwicklung (35a) gewickelt ist, wobei die ersten Stäbe (310) so verbunden sind, dass die ersten Sekundärwicklungen (35a) parallel zueinander sind;
- der zweite Magnetkreis (M2) mindestens zwei zweite Stäbe (320) aufweist, um die jeweils eine zweite Sekundärwicklung (35b) gewickelt ist, wobei die zweiten Stäbe (320) so verbunden sind, dass die zweiten Sekundärwicklungen (35b) parallel zueinander sind.

9. Spannungswandler (21) nach einem der vorhergehenden Ansprüche, wobei der Hochspannungskreis (23') eine H-Brücke mit zwei Zweigen (B1 und B2) aufweist, die parallel angeordnet sind und jeweils ein Hochschaltelement (Q_{H1}, Q_{H2}) und ein Tiefschaltelement (Q_{L1}, Q_{L2}) aufweisen, die in Reihe geschaltet sind, wobei die Enden der Zweige (B1 und B2) mit den Anschlüssen der Hochspannungsquelle (25) verbunden sind und die Mittelpunkte der Zweige (B1 und B2) jeweils mit einem ersten und einem zweiten Ende der Primärwicklung (33) verbunden sind.

10. Spannungswandler (21) nach einem der Ansprüche 1 bis 8, wobei der Hochspannungskreis (23") einen Zweig (B) mit einem Hochschaltelement (Q_{H}) und einem Tiefschaltelement in Reihe (Q_{L}) aufweist, wobei die Enden des Zweiges (B) jeweils mit einem positiven und einem negativen Anschluss der Hochspannungsquelle (29) verbunden sind, wobei der Mittelpunkt des Zweiges (B) mit einem ersten Ende der Primärwicklung (33) verbunden ist, wobei das zweite Ende der Primärwicklung (33) über einen Kondensator (37) mit dem negativen Anschluss der Hochspannungsquelle (25) verbunden ist.

11. Verfahren zum Steuern eines Spannungswandlers (21) nach Anspruch 9, wobei die Schaltelemente (Q_{H}, Q_{L}, Q_{H1}, Q_{H2}, Q_{L1}, Q_{L2}) des Hochspannungskreises (23') zyklisch so angesteuert werden, dass in einem ersten Teil des Zyklus für den ersten Zweig (B1) das Hochschaltelement (Q_{H1}), das mit dem positiven Anschluss der Hochspannungsquelle (25) verbunden ist, in der geschlossenen Position und das Tiefschaltelement (Q_{L1}), das mit dem negativen Anschluss der Hochspannungsquelle (25) verbunden ist, in der offenen Position ist, während für den zweiten Zweig (B2) das Hochschaltelement (Q_{H2}), das mit dem positiven Anschluss der Hochspannungsquelle (25) verbunden ist, in der offenen Position und das Tiefschaltelement (Q_{L2}), das mit dem negativen Anschluss der Hochspannungsquelle (25) verbunden ist, in der geschlossenen Position ist und in einem zweiten Teil des Zyklus für den ersten Zweig (B1) das Hochschaltelement (Q_{H1}), das mit dem positiven Anschluss der Hochspannungsquelle (25) verbunden ist, in der offenen Position und das Tiefschaltelement (Q_{L1}), das mit dem negativen Anschluss der Hochspannungsquelle (25) verbunden ist, in der geschlossenen Position ist, während für den zweiten Zweig (B2) das Hochschaltelement (Q_{H2}), das mit dem positiven Anschluss der Hochspannungsquelle (25) verbunden ist, in der geschlossenen Position und das Tiefschaltelement (Q_{L2}), das mit dem negativen Anschluss der Hochspannungsquelle (25) verbunden ist, in der offenen Position ist.

12. Verfahren zum Steuern eines Spannungswandlers (21) nach Anspruch 10, wobei die Schaltelemente (Q_{H}, Q_{L}) des Hochspannungskreises (23") zyklisch so angesteuert werden, dass in einem ersten Teil des Zyklus das Hochschaltelement (Q_{H}), das mit dem positiven Anschluss der Hochspannungsquelle (25) verbunden ist, in der geschlossenen Position und das Tiefschaltelement (Q_{L}), das mit dem negativen Anschluss der Hochspannungsquelle (25) verbunden ist, in der offenen Position ist und in einem zweiten Teil des Zyklus das Hochschaltelement (Q_{H}), das mit dem positiven Anschluss der Hochspannungsquelle (25) verbunden ist, in der offenen Position und das Tiefschaltelement (Q_{L}), das mit dem negativen Anschluss der Hochspannungsquelle (25) verbunden ist, in der geschlossenen Position ist.

## Claims

1. DC voltage converter (21) comprising:
- a magnetic component (31) allowing energy to be transferred between a primary circuit and a secondary circuit,
- a high-voltage circuit (23, 23', 23") connecting a high-voltage source (25) to the primary circuit of the magnetic component (31),
- a low-voltage circuit (27, 27', 27") connecting the secondary circuit of the magnetic component (31) to a low-voltage source (29),
the primary circuit of the magnetic component (31) comprising a primary winding (33) and the secondary circuit of the magnetic component (31) comprising first (35a) and second (35b) secondary windings not magnetically coupled to each other, said first (35a) and second (35b) secondary windings being magnetically coupled to the primary winding (33), and **characterized in that** the magnetic component (31) is configured:
- on the one hand, to transfer energy from the primary winding (33) only to the second secondary winding (35b) and not to the first secondary winding (35a) during a first cycle, and to transfer energy from the primary winding (33) only to the first secondary winding (35a) and not to the second secondary winding (35b) during a second cycle, wherein passage from the first cycle to the second cycle, or passage from the second cycle to the first cycle, requires a transition phase to obtain zero-voltage switching; and
- on the other hand, to act as an impedance which stores energy at the primary winding (33), the primary winding (33) and the secondary windings (35a, 35b) of the magnetic component (31) being connected by at least one magnetic circuit (M, M1, M2, M1', M2') and wherein a magnetic path connecting the first and second secondary windings comprises at least two air gaps.

2. Voltage converter (21) according to Claim 1, wherein the secondary winding (35a, 35b) to which the magnetic component acts as a transformer depends on the voltage supplied at the primary winding (33).

3. Voltage converter (21) according to either of the preceding claims, wherein the magnetic component (31) comprises a magnetic circuit (M) having the general shape of an unclosed eight and comprising a first loop with a first air gap (E1), a second loop with a second air gap (E2) and a central portion common to the first and to the second loop, the primary winding (33) being wound around the central portion, the first secondary winding (35a) being wound around the first loop, the second secondary winding (35b) being wound around the second loop.

4. Voltage converter (21) according to any one of the preceding claims, wherein the magnetic component (31) comprises a first magnetic circuit (M1, M1') and a second magnetic circuit (M2, M2') distinct from the first, the primary winding (33) being wound around both the first (M1, M1') and second (M2, M2') magnetic circuits, the first secondary winding (35a) being wound around the first magnetic circuit (M1, M1') and the second secondary winding (35b) being wound around the second magnetic circuit (M2, M2').

5. Voltage converter (21) according to Claim 4, wherein the first (M1') and second (M2') magnetic circuits respectively comprise an air gap (E1', E2').

6. Voltage converter (21) according to one of the preceding claims, wherein the secondary circuit of the magnetic component (31) comprises at least two first secondary windings (35a) in parallel and at least two second secondary windings (35b) in parallel.

7. Voltage converter (21) according to Claims 3 and 6, wherein the magnetic circuit (M) of the magnetic component (31) further comprises:
- at least one first bar (310) around which a first secondary winding (35a) is wound, said first bar (310) comprising an air gap (E1) and being connected to the first loop such that the first secondary windings (35a) are parallel to each other;
- at least one second bar (320) around which a second secondary winding (35b) is wound, said second bar (320) comprising an air gap (E2) and being connected to the second loop such that the second secondary windings (35b) are parallel to each other.

8. Voltage converter (21) according to Claims 4 or 5, and Claim 7, wherein:
- the first magnetic circuit (M1) comprises at least two first bars (310) around which a respective first secondary winding (35a) is wound, said first bars (310) being connected such that the first secondary windings (35a) are parallel to each other;
- the second magnetic circuit (M2) comprises at least two second bars (320) around which a respective second secondary winding (35b) is wound, said second bars (320) being connected such that the second secondary windings (35b) are parallel to each other.

9. Voltage converter (21) according to one of the preceding claims, wherein the high-voltage circuit (23') comprises an H bridge comprising two branches (B1 and B2) connected in parallel and each comprising a high switching element (Q_{H1}, Q_{H2}) and a low switching element (Q_{L1}, Q_{L2}) connected in series, the ends of the branches (B1 and B2) being connected to the terminals of the high-voltage source (25) and the midpoints of the branches (B1 and B2) being connected to a first and a second end of the primary winding (33), respectively.

10. Voltage converter (21) according to one of Claims 1 to 8, wherein the high-voltage circuit (23") comprises a branch (B) comprising a high switching element (Q_{H}) and a low switching element (Q_{L}) in series, the ends of the branch (B) being connected to a positive and a negative terminal, respectively, of the high-voltage source (29), the midpoint of the branch (B) being connected to a first end of the primary winding (33), the second end of the primary winding (33) being connected to the negative terminal of the high-voltage source (25) via a capacitor (37).

11. Method of controlling a voltage converter (21) according to Claim 9, wherein the switching elements (Q_{H}, Q_{L}, Q_{H1}, Q_{H2}, Q_{L1}, Q_{L2}) of the high-voltage circuit (23') are driven cyclically such that, during a first cycle portion, for the first branch (B1), the high switching element (Q_{H1}) connected to the positive terminal of the high-voltage source (25) is in the closed position and the low switching element (Q_{L1}) connected to the negative terminal of the high-voltage source (25) is in the open position while for the second branch (B2), the high switching element (Q_{H2}) connected to the positive terminal of the high-voltage source (25) is in the open position and the low switching element (Q_{L2}) connected to the negative terminal of the high-voltage source (25) is in the closed position, and during a second cycle portion, for the first branch (B1), the high switching element (Q_{H1}) connected to the positive terminal of the high-voltage source (25) is in the open position and the low switching element (Q_{L1}) connected to the negative terminal of the high-voltage source (25) is in the closed position while for the second branch (B2), the high switching element (Q_{H2}) connected to the positive terminal of the high-voltage source (25) is in the closed position and the low switching element (Q_{L2}) connected to the negative terminal of the high-voltage source (25) is in the open position.

12. Method of controlling a voltage converter (21) according to Claim 10, wherein the switching elements (Q_{H}, Q_{L}) of the high-voltage circuit (23") are driven cyclically such that, during a first cycle portion, the high switching element (Q_{H}) connected to the positive terminal of the high-voltage source (25) is in the closed position and the low switching element (Q_{L}) connected to the negative terminal of the high-voltage source (25) is in the open position and, during a second cycle portion, the high switching element (Q_{H}) connected to the positive terminal of the high-voltage source (25) is in the open position and the low switching element (Q_{L}) connected to the negative terminal of the high-voltage source (25) is in the closed position.
